# EUROPEAN PATENT APPLICATION

(11) **EP 2 298 481 A1**
(43) Date of publication of application: **23.03.2011**
(21) Application number: 09770349.0
(22) Date of filing: 22.06.2009
(51) Int. Cl.: B23D 17/04

(54) **SHEET MATERIAL CUTTING DEVICE**

(30) Priority: 27.06.2008 KR 20080061884
(71) Applicant: Park, Hong Soon, Gyeonggi-do 415-802 (KR); Park, Young Keun, Gyeonggi-do 415-802 (KR)
(72) Inventor: Park, Hong Soon, Gyeonggi-do 415-802 (KR); Park, Young Keun, Gyeonggi-do 415-802 (KR)
(74) Representative: Sajda, Wolf E.
(86) International application number: PCT/KR2009/003326
(87) International publication number: WO 2009/157677

(57) **Abstract**

A plate material cutting apparatus is provided, which includes a pair of rotators installed to be apart from each other in opposite directions to rotate in association with each other; a support holder installed to penetrate a center portion of the pair of rotators and having a slit formed therein so that a plate material can pass through the slit; and a cutting member installed on the outside of the support holder to cut the plate material as rotating together with the rotators in a state where both ends of the cutting member are supported by the pair of rotators. According to the plate material cutting apparatus, the plate material can be cut with diverse cutting surface shapes, and the cutting quality can be improved.

## Description

### BACKGROUND OF THE INVENTION

### Field of the invention

The present invention relates to a plate material cutting apparatus, and more particularly to a plate material cutting apparatus which can cut a plate material with diverse cutting surface shapes and has a superior cutting quality.

### Description of the Prior Art

Diverse apparatuses for cutting a plate material mainly made of a metal have been disclosed. These apparatuses can cut the plate material typically with the same cutting surface shape. Accordingly, in the case of cutting a plate material with different cutting surface shapes, a cutting member for cutting the plate material should be replaced, and in some cases, the replacement of such a cutting member itself may be impossible.

Accordingly, if it is required to successively cut a strip-shaped plate material successively provided with diverse cutting surface shapes, the cutting apparatuses in the related art cannot perform cutting operation smoothly. Even if the cutting apparatuses in the related art can perform such cutting operation, the productivity and the workability are degraded to increase the cost for cutting the plate material.

On the other hand, an apparatus (folding system) which manufactures cutting blades that are folded at a predetermined angle by folding a strip-shaped metal plate and cutting the folded metal plate has already been disclosed (Korean Registered Patent No. 0 343 415). Here, the cutting blade means a thin plate which is made of special steel and has one side on which a cutting blade for cutting an object is formed. The above-described apparatus is provided with a cutter (folding apparatus) which moves to slide left and right on a front surface of a plate holder to cut a provided strip-shaped metal plate being.

According to this apparatus, however, the cutter cuts the metal plate as it moves to slide in left and right directions based on a supply direction of the metal plate, and thus it has the problem that the cutting surface of the metal plate is uneven. Also, in some cases, the metal plate may be bent in a proceeding direction of the cutter.

That is, since the cutter is constructed so that only one side thereof is fixed and the other side thereof is rotated about the fixing point (as a result, the other side draws an arc-shaped trace), the cutter sequentially contact the cutting surfaces of the metal plate. Accordingly, between the cutter and the cutting surface of the metal plate, different forces are applied in accordance with their contact portion, and this causes the metal plate to be bent in the proceeding direction of the cutter.

### SUMMARY OF THE INVENTION

Accordingly, the present invention has been made to solve the above-mentioned problems occurring in the related art while advantages achieved by the related art are maintained intact.

One subject to be achieved by the present invention is to provide a plate material cutting apparatus which makes a cutting blade of a cutting member uniformly contact the cutting surface of the plate material, and thus can improve the quality of the plate material cutting surface.

Another subject to be achieved by the present invention is to provide a plate material cutting apparatus which can cut a plate material with diverse cutting surface shapes using only one apparatus, and thus can improve the productivity and workability of the plate cutting.

In one aspect of the present invention, there is provided a plate material cutting apparatus, which includes a pair of rotators installed to be apart from each other in opposite directions to rotate in association with each other; a support holder installed to penetrate a center portion of the pair of rotators and having a slit formed therein so that a plate material can pass through the slit; and a cutting member installed on the outside of the support holder to cut the plate material as rotating together with the rotators in a state where both ends of the cutting member are supported by the pair of rotators.

Here, the pair of rotators may be installed to be apart from each other in the opposite directions, and more specifically, may be installed to be apart from each other in upward and downward directions, or in left and right directions. However the installation directions of the pair of rotators are not limited to the upward and downward directions or in left and right directions.

The cutting member may be rotatably engaged with the support holder. For example, a projection portion which projects to the outside and has a ring-shaped cross-section may be formed on an outer surface of the support holder, and an accommodation portion which is inwardly recessed to correspond to the projection portion so as to accommodate at least a portion of the projection portion may be formed on an inner surface of the cutting member.

Also, a projection portion which projects to the outside and has a curved cross-section with a predetermined curvature may be formed on an inner surface of the cutting member, and an accommodation portion which is inwardly recessed to correspond to the projection portion so as to accommodate at least a portion of the projection portion may be formed on an outer surface of the support holder.

On the other hand, the plate material cutting apparatus according to an embodiment of the present invention may further include a driving member for moving the support holder in a direction that corresponds to a rotating center shaft direction of the rotators. Here, the direction that corresponds to a rotating center shaft direction of the rotators may mean an upward/downward direction in the case where the pair of rotators are installed in the upward/downward direction, and may mean a left/right direction in the case where the pair of rotators are installed in the left/right direction.

In this case, a cutting blade for cutting the plate material may be formed on both end portions in a circumferential direction of the cutting member, and the cutting blade may include a plurality of sub-cutting blades which are provided in a direction that corresponds to the rotating center shaft direction of the rotators and are able to cut the plate material in different cutting surface shapes.

Also, the plate material cutting apparatus according to an embodiment of the present invention may further include an adjustment means for adjusting a moving distance of the support holder by controlling the movement of the support holder. This adjustment member may include a stopper that adjusts upward and downward moving distances of the support holder by restricting upward/downward movement of the support holder.

In addition, the pair of rotators may include a holder accommodation hole for accommodating the support holder, and a cutting member accommodation hole formed in the outside of the holder accommodation hole to accommodate the cutting member therein.

Since the plate material cutting apparatus according to an embodiment of the present invention is constructed so that the cutting blades of the cutting member simultaneously contact the entire cutting surfaces of the plate material to cut the plate material, a uniform force is applied to the entire cutting surfaces of the plate material, and the bending of the cutting surfaces does not occur to improve the quality of the cutting surfaces.

Also, since the cutting member of the plate material cutting apparatus according to an embodiment of the present invention is connected in the upward/downward direction and includes a plurality of sub-cutting blades that can cut the plate material in different cutting surface shapes, the plate material can be cut with diverse cutting surfaces using only one cutting apparatus by adjusting eh upward/downward moving distance of the cutting member, and thus the productivity and workability of the plate material processing can be improved and the cost for processing the plate material can be reduced.

### BRIEF DESCRIPTION OF THE DRAWINGS

The above and other objects, features and advantages of the present invention will be more apparent from the following detailed description taken in conjunction with the accompanying drawings, in which:
- FIG. 1: is a perspective view illustrating a plate material cutting apparatus according to an embodiment of the present invention;
- FIG. 2: is a front view of the apparatus in FIG. 1;
- FIG. 3: is an exploded perspective view of main constituent portions in a plate material cutting apparatus according to an embodiment of the present invention;
- FIG. 4: is a perspective view illustrating a state where a support portion of a support holder and a cutting member are inserted into a cutting member accommodation hole and a holder accommodation hole, respectively;
- FIG. 5: is a perspective view illustrating a support holder according to an embodiment of the present invention;
- FIG. 6: is a perspective view illustrating a cutting member according to an embodiment of the present invention;
- FIG. 7: is a perspective view illustrating a support holder and a cutting member in a combined state;
- FIG. 8: is a cross-sectional view taken along the line I-I in FIG. 1; and
- FIGS. 9 to 12: are front views illustrating examples of cutting surface shapes that can be cut through the cutting member according to an embodiment of the present invention.

### DETAILED DESCRIPTION OF THE PREFERRED EMBODIMENTS

Hereinafter, preferred embodiments of the present invention will be described in detail with reference to the accompanying drawings. However, the present invention is not limited to the embodiments thereof. For reference, the same reference numerals are used for the same elements across various figures. Under the above-described rules, explanation may be made referring to the contents described in the drawings or the contents which are determined to be apparent to those skilled in the art or which are duplicated may be omitted.

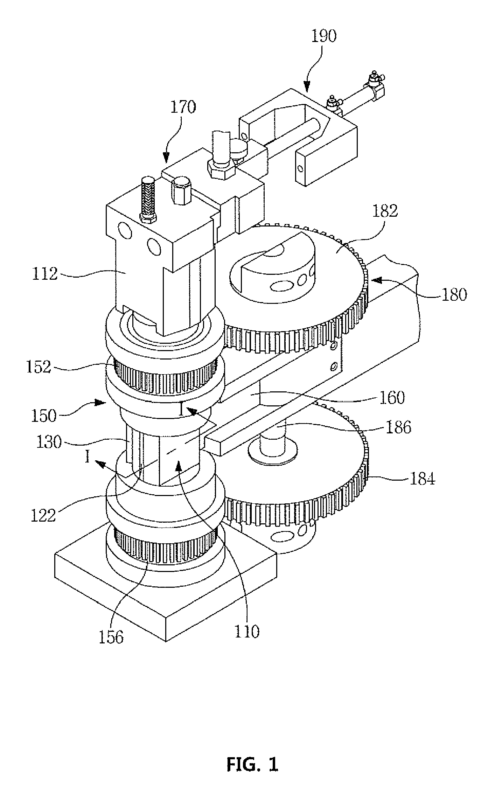

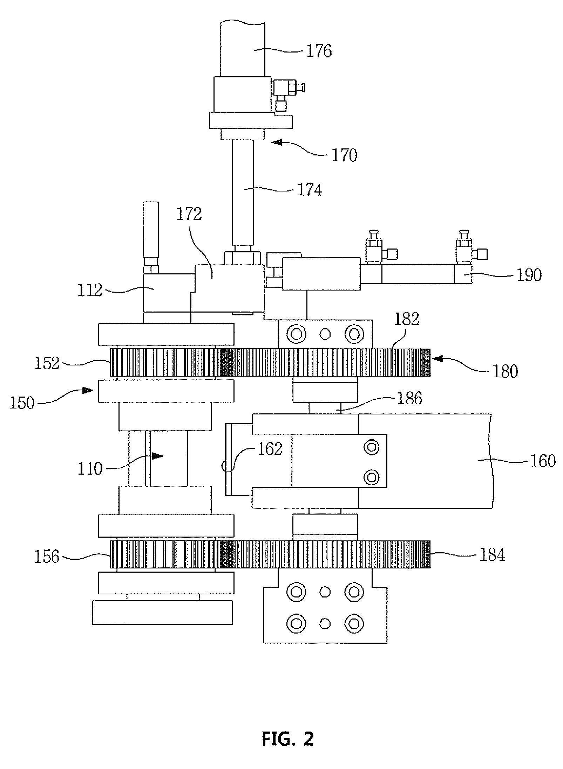

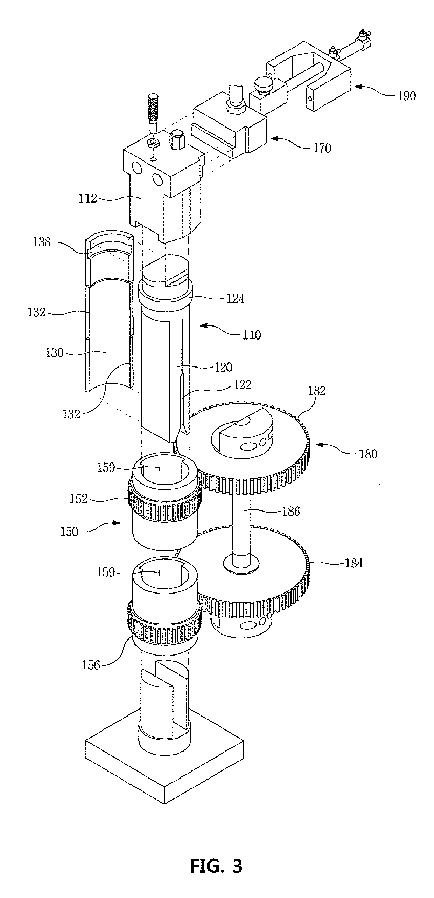

FIG. 1 is a perspective view illustrating a plate material cutting apparatus according to an embodiment of the present invention, and FIG. 2 is a front view of FIG. 1. FIG. 3 is an exploded perspective view of main constituent portions in a plate material cutting apparatus according to an embodiment of the present invention.

As illustrated in FIGS. 1 to 3, the plate material cutting apparatus includes a support holder 110, a cutting member 130, and rotators 150. For reference, a pair of rotators 150 may be installed to be apart from each other in opposite directions, and more specifically, may be installed to be apart from each other in the upward and downward directions or in the left and right directions. However, the installation directions of the pair of rotators are not limited thereto. Hereinafter, for convenience in explanation, explanation will be made with respect to a pair of rotators installed in the upward and downward directions as an example.

The support holder 110 basically serves to support the provided plate material so that the cutting member 130 can stably cut the plate material. For this, in the support holder 110, a slit 122 may be formed in a direction that corresponds to a providing direction of the plate material. The plate material that is successively provided along a guide hole of a plate material guiding member 160 is guided into the slit 122 as long as a predetermined length for which cutting is required, and the guided plate material may be supported by an inner surface of the slit 122 in a state where the plate material is inserted into the slit 122 while the plate material is cut by the cutting member 130.

The support holder 110 may be installed on a connection line that connects the center portion of the pair of rotators 150 to be described later, that is, on a connection line that connects the center portion of the upper rotator 152 and the center portion of the lower rotator 156 as illustrated in FIG. 3.

As a result, the support holder 110 may be installed to penetrate the center portions of the pair of rotators 150. In this case, the support holder may be constructed so that it does not rotate irrespective of the rotation of the rotators 150. Also, the support holder 110 may be constructed so that it can move upward and downward by the upward/downward driving member 170.

By constructing the support holder 110 to move upward and downward, even if not only a plane-shaped plate material but also a bent plate material is supplied, the support holder 110 appropriately moves upward and downward, and thus the plate material cutting apparatus according to an embodiment of the present invention can cut the supplied plate material irrespective of the shape of the plate material.

For reference, the plate material means a material which is formed in a plate shape and is mainly made of metal, and it is preferable that the plate material is formed in a strip shape so that continuous supply of the plate material becomes possible to improve the working efficiency according to automation.

On the other hand, the support holder 110 may include a connection portion 112 and a support portion 120. One side of the connection portion 112 may be engaged with the upward/downward driving member 170 that can move the support holder 110 upward and downward, and the other side thereof may be engaged with the support portion 120. The support portion 120 may be provided with the slit 122 formed therein, and a projection portion 124 that is accommodated in the accommodation portion 138 of the cutting member 130 may be formed on the outer surface of the support portion 120. The detailed engagement structure of the support portion 120 and the cutting member 130 will be described later.

Here, the connection portion and the support portion may be integrally provided, but as in this embodiment of the present invention, they may be separately provided and may be mutually engaged with each other. However, in consideration of the diverse shapes of the plate material to be cut, it is preferable that they are separately provided and engaged with each other later.

That is, since the slit 122 of the support portion 120 is formed to receive the plate material inserted thereto and to support the plate material during a cutting process, it is preferable that the slit 122 having a proper width according to the kind of plate material to be cut is formed in the support portion 120. Accordingly, in consideration of the general purpose of the plate material cutting apparatus, it is preferable that the connection portion 112 and the support portion 120 are separately prepared and the support portion 120 is replaceably constructed.

Also, the support 120 of the support holder 110 may be formed as a single member or may be formed by engaging two symmetric members. Accordingly, the slit may be formed in a single member or may be formed between two members.

On the other hand, the cutting member 130 serves to rotate along with the rotation of the rotators 150 and to cut the plate material inserted into the slit 122. For this, on both end portions in the circumferential direction of the cutting member 130, a cutting blade 132 for cutting the plate material is formed. In this case, the cutting blade 132 is typically formed in the upward/downward direction along the both end portions of the cutting member 130. That is, the forming direction of the cutting blade 132 and the rotating shaft of the cutting member 130 are generally in parallel to each other. Accordingly, if the cutting member 130 rotates along its rotating shaft, the trace of the cutting blade 132 may be in a circular shape around the rotating shaft.

Through the above-described construction, the plate material cutting apparatus according to an embodiment of the present invention can cut the front side or the rear side of the plate material inserted into the slit 122 according to its rotating direction. That is, if the plate material is guided into the slit 122 for a predetermined distance, the front side of the plate material may project to the outside of the support portion 120, and if the cutting member 130 rotates in a direction on the front side of the plate material in this state, the front side of the plate material may be cut, while if the cutting member 130 rotates in the opposite direction, the rear side of the plate material may be cut.

Also, according to the plate material cutting apparatus according to an embodiment of the present invention, since the cutting blade 132 uniformly presses the cutting surface of the plate material, the quality of the plate material cutting surface can be improved. Specifically, in this embodiment, the cutting blade 132 can cut the plate material in a state where the cutting blade 132 simultaneously contacts the entire cutting surfaces of the plate material.

That is, the plate material is arranged in the diameter direction of the rotating trace of the cutting member 130 in a state where the plate material is inserted into the slit 122, and the cutting member 130 rotates along the outer surface of the support portion 120. Accordingly, the height direction of the plate material and the rotating shaft of the cutting member 130 are generally in parallel to each other.

The cutting blade 132 that is formed at the end portion in the circumferential direction of the cutting member 130 may be simultaneously in contact with the entire cutting surfaces of the plate material. Accordingly, since a uniform force can be applied to the entire cutting surface of the plate material, the bending of the cutting surface does not occur, and thus the cutting surface can be straightly formed.

On the other hand, for the rotation of the cutting member 130 as described above, the plate material cutting apparatus may include a pair of rotators 150 which are installed to be apart from each other in the upward/downward direction, rotate in association with each other, and rotate together with the cutting member 130 in a state where the rotators support the tipper and lower sides of the cutting member 130.

In order to apply a uniform force to the plate material cutting surfaces, it is preferable to simultaneously give a rotating force to the upper and lower portions of the cutting blade 130 rather than giving the rotating force only to the upper portion or the lower portion. Accordingly, in this embodiment, a pair of rotators 150, that is, an upper rotator 152 and a lower rotator 156, which rotate in association with each other. In this case, it is preferable that the rotators 150 are arranged to be apart from each other in the upward/downward direction based on the cutting blade 132 that is in contact with the plate material cutting surfaces.

Also, in this embodiment, since the support portion 120 of the support holder 110 does not rotate typically, and only the cutting blade 130 rotates, the rotators 150 are formed to accommodate the cutting member 130, and only the cutting member 130 rotates according to the rotation of the rotators 150.

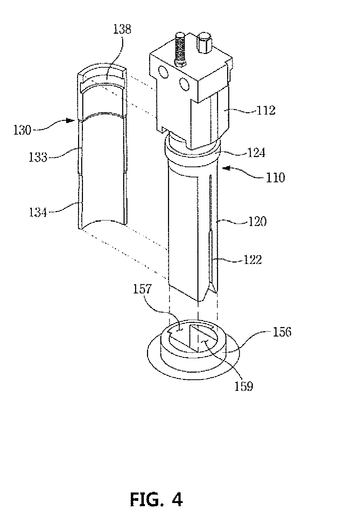

Here, referring to FIGS. 3 and 4, the details of the operation of the plate material cutting apparatus will be described. FIG. 4 is a perspective view illustrating a state where a support portion of a support holder and a cutting member are inserted into a cutting member accommodation hole and a holder accommodation hole, respectively.

As illustrated in FIG. 3, a pair of driving gears 180 are rotatably constructed in association with each other by a driving shaft 186. The lower end portion of the driving shaft 186 is typically connected to a driving motor (not illustrated) through a coupling (not illustrated) and a speed reduction gear (not illustrated). Accordingly, if the driving shaft 186 rotates by the driving motor, the upper and lower driving gears 182 and 184 rotate simultaneously in association with each other at the same angular velocity. In this case, the upper and lower driving gears 182 and 184 are engaged with gear teeth formed on outer circumferences of the upper and lower rotators 152 and 156, respectively.

On the other hand, since it is preferable that the cutting blade 132 of the cutting member 130 is simultaneously in contact with the entire cutting surfaces of the plate material, it is required that the upper and lower rotators 152 and 156 rotate in the same direction at the same angular velocity. For this, the upper and the lower driving gears 182 and 184 may be formed to have the same shape, and thus the upper and the lower rotators 152 and 156 may also be forked to have the same shape. Accordingly, the gear ratio between the upper driving gear 182 and the upper rotator 152 may be the same as the gear ratio between the lower driving gear 184 and the lower rotator 156.

However, since the support portion 120 of the support holder 110 that is engaged with the cutting member 130 does not rotate typically, the rotator 150 should be constructed to rotate only the cutting member 130. For this, in the pair of rotators 150, a holder accommodation hole 159 for accommodating the support portion 120 of the support holder 110 and a cutting member accommodation hole 157 for accommodating the cutting member 130 may be formed in the outside of the holder accommodation hole 159.

Referring to FIG. 4, in the case of the cutting member 130 and the support portion, 120 of the support holder 110, an engagement portion between them does not exist except for an engagement portion through the projection portion 124 and the accommodation portion 138. Also, the cutting member 130, as described layer, is rotatably engaged with the support portion 120.

Accordingly, the cutting member 130 and the support portion 120 may be inserted into the cutting member accommodation hole 157 and the holder accommodation hole 159, respectively. If the rotator 150 rotates in the above-described engagement state, one outer surface that corresponds to the cotton member 130 is pressed by one inner surface of the cutting member accommodation hole 157, and thus the cutting member 130 can rotate together with the rotator 150.

In this embodiment, as described above, a plurality of gears which are engaged with each other are used to implement the rotating operation of the rotators 150. However, the rotating operation of the rotators may be implemented by another method except for the gear engagement method. For example, the driving gear and the rotator may be formed by pulleys and a belt may be connected between them. That is, the rotating operation of the rotator may be implemented by connecting the rotator to the driving pulley connected to the driving shaft 186 through the belt.

On the other hand, the cutting member 130 may move upward and downward together with the support holder 110 by the upward/downward driving member 170. In detail, as illustrated in FIG. 2, the upward/downward driving member 170 includes a movement portion 172 engaged with the connection portion 112 of the support holder 110 to move together with the connection portion 112, a connection shaft 174 moving the movement portion 172 upward and downward, and a cylinder portion 176 generating a driving force for upward/downward movement of the connection shaft 174.

Here, the connection portion 112 of the support holder 110 may be connected to the movement portion 172 of the upward/downward driving member 170 by a fastening means such as a bolt, and as the connection shaft 174 moves the movement portion 172 upward and downward, the support holder 110 can also move upward and downward together with the cutting member 130.

In addition, as illustrated in FIGS. 1 to 3, the plate material cutting apparatus according to an embodiment of the present invention may further include a stopper 190 that adjusts upward and downward moving distances of the support holder 110 by restricting upward/downward movement of the support holder 110. The stopper 190 is constructed to intervene to the lower side of the movement portion 172. Accordingly, after the stopper 190 intervenes to the lower side of the movement portion 172, the movement portion 172 is unable to further descend.

However, the construction of the stopper is not limited thereto, and any construction that can adjust the moving distance by restricting the upward/downward movement of the support holder 110 may be employed in the plate material cutting apparatus according to an embodiment of the present invention.

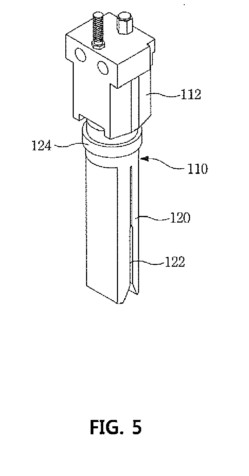

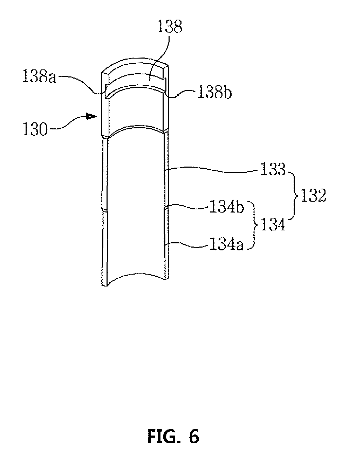

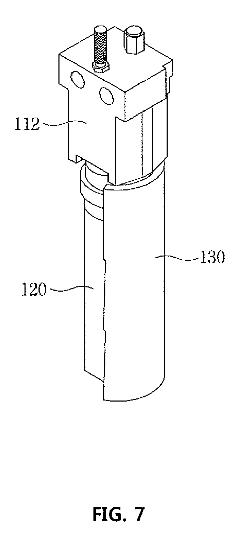

Hereinafter, with reference to FIGS. 5 to 7, the support holder and the cutting member according to an embodiment of the present invention will be described. FIG. 5 is a perspective view illustrating a support holder according to an embodiment of the present invention, FIG. 6 is a perspective view illustrating a cutting member according to an embodiment of the present invention, FIG. 7 is a perspective view illustrating a support holder and a cutting member in a combined state.

As described above, the support holder 110 may include the connection portion 112 and the support portion 120. In the support portion 120, as illustrated in FIG. 5, the slit 122 may be formed in a direction that corresponds to the providing direction of the plate material, and the provide plate material may be inserted into the slit 122. Here, the slit 122 may be formed with different widths according to the sub-cutting blades 133 and 134 arranged in the plate material cutting position. The sub-cutting blades 133 and 134 will be described later.

On the other hand, in this embodiment, the lower side of the support portion 120 in which the slit 122 is formed, as illustrated in FIG. 5, is formed in the form of a hexahedron as a whole. However, the shape of the lower side of the support portion 120 is not limited thereto. That is, any construction which can stably support the inserted plate material and does not limit the rotation of the cutting member 130 can be employed as the shape of the lower side of the support portion according to an embodiment of the present invention.

Also, on the upper side of the support portion 120, a projection portion 124 that can be rotatably engaged with the cutting member 130 is formed. That is, on the outer surface of the support portion 120, the projection portion 120 which projects to the outside and has a ring-shaped cross section may be formed. To correspond to the projection portion 124, as illustrated in FIG. 6, an accommodation portion 138 which is inwardly recessed to accommodate at least a portion of the projection portion 124 may be formed on the inner surface of the cutting member 130.

As the projection portion and the accommodation portion 138 are formed as described above, the cutting member 130 can rotate along the outer circumference of the projection portion 124, and move upward/downward together with the support holder 110 by the driving member 170. The engagement state of the support holder 110 with the cutting member 130 is illustrated in FIG. 7.

The rotation and the upward/downward movement of the cutting member 130 will be described in detail. In the case where the support holder 110 moves upward/downward, the projection portion 124 presses or support upper (or lower) locking portions 138a and 138b of the accommodation unit 138, and thus the cutting member 130 moves upward/downward together with the support holder 110. In this case, the cutting member 130 is prevented from seceding to the outside by the rotator 150.

That is, since the cutting member 130 is accommodated in the cutting member accommodation hole 157 of the rotator 150, the cutting member 130 does not secede from the state supported by the projection portion 124 to the outside, and moves upward/downward.

Also, in the case where the cutting member 130 rotates along the outer circumference of the support holder 110, in the same manner as the case where the cutting member moves upward/downward, the upper locking portion 138a of the accommodation portion 138 is supported by the projection portion 124 in a state where the cutting member 130 is prevented from seceding to the outside by the rotator 150, and thus the cutting member 130 can rotate along the outer circumference of the projection portion 124 together with the rotator 150.

However, the engagement structure of the support holder 110 and the cutting member 130 is not limited thereto. For example, the projection portion and the accommodation portion may be formed on the support holder and the cutting member in the reverse manner. That is, the projection portion which projects to the outside and has a curved cross-section having a constant curvature may be formed on the inner surface of the cutting member, and to correspond this, the accommodation portion which is inwardly recessed to correspond to the projection portion so as to accommodate at least a portion of the projection portion may be formed on the outer surface of the support holder. Even with this construction, the cutting member can rotate along the outer surface of the support holder and can move upward/downward together with the support holder.

As a result, according to the plate material cutting apparatus according to an embodiment of the present invention, as the cutting member 130 is rotatably engaged with the support holder 110, the cutting member 130 can be stably move upward/downward, and can rotate together with the rotator 150, even with a relatively simple structure.

On the other hand, as illustrated in FIG. 6, the cutting member 130 has a cross-section that is formed to connect two arcs which have the same center but different radiuses as a whole. Also, on the inner surface of the cutting member 130, the cutting blade 132 for cutting the plate material may be formed in the circumferential direction.

The cutting blade 132 is a portion that first contacts the plate material to be cut according to the rotation of the cutting member 130, and it is preferable that the cutting blade 132 is formed to correspond to the cutting surface shape so that the cutting blade 132 can cut the plate material with a desired cutting surface shape.

For example, in the case where the cutting blade 134 is formed to have a straight portion 134a that is straightly formed in the upward/downward direction and a slanting portion 134b that is slantingly extended from the straight portion 134a, the cutting surface of the plate material that is cut by the cutting blade 134 also ahs a straight portion and the slanting portion to correspond to the shape of the cutting blade 134. As a result, by forming the shape of the cutting blade 132 to correspond to a desired cutting surface shape, diverse cutting surface shapes of the plate material can be obtained.

On the other hand, by making the cutting blade 132 include a plurality of sub-cutting blades 133 and 134 which are provided in the upward/downward direction, diverse cutting surface shapes can be obtained using only one cutting member 130. That is, by forming a plurality of sub-cutting blades 133 and 134 that correspond to different cutting surface shapes in the upward/downward direction, arranging the sub-cutting blades 133 and 134 that correspond to desired cutting surface shapes in the plate material cutting position by the upward/downward driving member 170, and rotating the cutting member 130, diverse cutting surface shapes can be implemented only by one cutting member 130.

In this case, in order to arrange the sub-cutting blades 133 and 134 that correspond to the required cutting surface shapes in the plate material cutting position, it is necessary to properly adjust the amount of the upward/downward movement of the support holder 110, and for this, the above-described stopper 190 may be used.

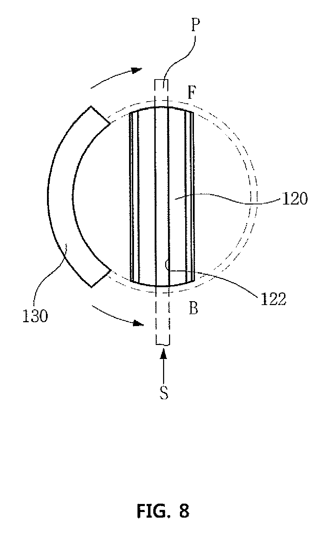

The above-described contents will be described in detail with reference to FIGS. 8 to 12.

FIG. 8 is a cross-sectional view taken along line I-I in FIG. 1, and FIGS. 9 to 12 are front views illustrating examples of cutting surface shapes that can be cut through the cutting member according to an embodiment of the present invention.

The cutting process of the plate material cutting apparatus according to an embodiment of the present invention will be described on the assumption that the cutting blade 132 of the cutting member 130 has two sub-cutting blades 133 and 134, the upper sub-cutting blade 133 is formed as only the straight portion, and the lower sub-cutting blade 134 is formed as a straight portion 134a and a slanting portion 134b.

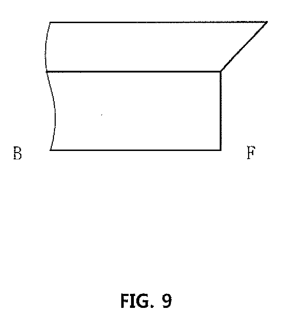

For reference, an arrow S indicated in FIG. 8 means the supply direction of the plate material, F in FIGS. 8 and 9 means the front side of the support holder 110 based on the supply direction of the plate material, and B in FIGS. 8 and 9 means the rear side of the support holder 110 based on the supply direction of the plate material.

First, a case where the plate material P is cut to have a cutting surface shape as shown in FIG. 9 will be described. By making the cutting member descend through the upward/downward deriving member 170, the lower sub-cutting blade 134 that corresponds to the cutting surface shape is arranged in a plate material cutting position (the plate material cutting position means a position in which the plate material P inserted into the slit 122 can be cut, and is typically positioned between the upper rotator 152 and the lower rotator 156).

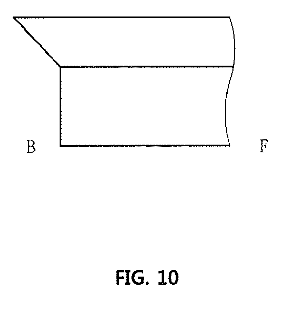

Then, the cutting member is rotated clockwise based on FIG. 8 through the rotator 150. Through the above-described upward/downward movement and rotating operation, the plate material P can be cut with the cutting surface as illustrated in FIG. 9. Also, in order to cut the plate material P in the cutting surface shape as illustrated in FIG. 10, the cutting member 130 is rotated counterclockwise in a state where the lower sub-cutting blade 134 is arranged in the plate material cutting position.

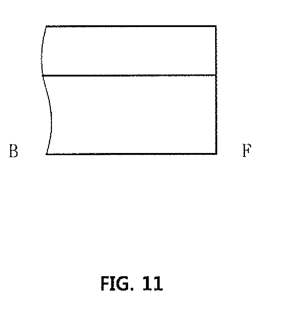

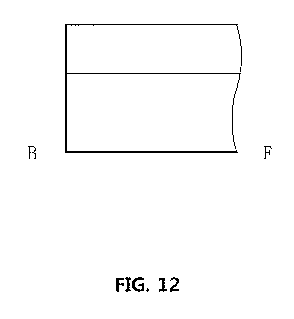

Next, a case where the plate material P is cut to have a cutting surface shape as shown in FIG. 11 will be described. By making the cutting member further descend thorough the upward/downward deriving member 170, the upper sub-cutting blade 133 that corresponds to the cutting surface shape is arranged in a plate material cutting position. Then, the cutting member 130 is rotated clockwise based on FIG. 8. Also, in order to cut the plate material P in the cutting surface shape as illustrated in FIG. 12, the cutting member 130 is rotated counterclockwise in a state where the upper sub-cutting blade 133 is arranged in the plate material cutting position.

As a result, by properly combining the upward/downward movement and the rotating direction of the cutting member 130, any combination of the cutting surface shapes as illustrated in FIGS. 9 to 12 can be made. Of course, the cutting surface shapes are not limited to those illustrated in FIGS. 9 to 12, and required cutting surface shape can be made according to the shapes of the cutting blades.

As described above, according to the plate material cutting apparatus according to an embodiment of the present invention, by properly adjusting the upward/downward movement and the rotating direction of the cutting member composed of a plurality of sub-cutting blades, the plate material can be cut with diverse cutting surface shapes by only one cutting apparatus. Through this, the plate material cutting apparatus according to an embodiment of the present invention can improve the productivity and the workability, and can reduce the cost for the plate material cutting process.

The plate material cutting apparatus according to the present invention can cut the plate material with diverse cutting surface shapes and provide a superior cutting quality, and is applicable in the industry.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A plate material cutting apparatus comprising:
- a pair of rotators installed to be apart from each other in opposite directions to rotate in association with each other;
- a support holder installed to penetrate a center portion of the pair of rotators and having a slit formed therein so that a plate material can pass through the slit; and
- a cutting member installed on the outside of the support holder to cut the plate material as rotating together with the rotators in a state where both ends of the cutting member are supported by the pair of rotators.

2. The plate material cutting apparatus according to claim 1,
wherein the cutting member is rotatably engaged with the support holder.

3. The plate material cutting apparatus according to claim 2,
wherein a projection portion which projects to the outside and has a ring-shaped cross-section is formed on an outer surface of the support holder, and an accommodation portion which is inwardly recessed to correspond to the projection portion so as to accommodate at least a portion of the projection portion is formed on an inner surface of the cutting member.

4. The plate material cutting apparatus according to claim 2,
wherein a projection portion which projects to the outside and has a curved cross-section with a predetermined curvature is formed on an inner surface of the cutting member, and an accommodation portion which is inwardly recessed to correspond to the projection portion so as to accommodate at least a portion of the projection portion is formed on an outer surface of the support holder.

5. The plate material cutting apparatus according to any one of claims 1 to 4,
wherein the pair of rotators are installed to be apart from each other in upward and downward directions.

6. The plate material cutting apparatus according to any one of claims 1 to 4,
further comprising a driving member for moving the support holder in a direction that corresponds to a rotating center shaft direction of the rotators.

7. The plate material cutting apparatus according to claim 6,
wherein a cutting blade for cutting the plate material is formed on both end portions in a circumferential direction of the cutting member, and the cutting blade includes a plurality of sub-cutting blades which are provided in a direction that corresponds to the rotating center shaft direction of the rotators and are able to cut the plate material in different cutting surface shapes.

8. The plate material cutting apparatus according to claim 6,
further comprising an adjustment means for adjusting a moving distance of the support holder by controlling the movement of the support holder.

9. The plate material cutting apparatus according to claim 1,
wherein the pair of rotators include a holder accommodation hole for accommodating the support holder and a cutting member accommodation hole formed in the outside of the holder accommodation hole to accommodate the cutting member therein.
